Europäisches Patentamt

European Patent Office

Office européen des brevets

(19)

(11) Veröffentlichungsnummer: **0 084 140**
**B1**

# (12) EUROPÄISCHE PATENTSCHRIFT

(45) Veröffentlichungstag der Patentschrift:
11.09.85

(21) Anmeldenummer: 82111763.7

(22) Anmeldetag: 18.12.82

(51) Int. Cl.⁴: **H 02 K 49/04, B 60 T 13/74,
B 61 H 7/08**

(54) **Permanentmagnetbremse, insbesondere fuer Fahrzeuge.**

(30) Priorität: 12.01.82 CH 144/82

(43) Veröffentlichungstag der Anmeldung:
27.07.83 Patentblatt 83/30

(45) Bekanntmachung des Hinweises auf die Patenterteilung:
11.09.85 Patentblatt 85/37

(84) Benannte Vertragsstaaten:
**AT BE CH DE FR GB IT LI NL SE**

(56) Entgegenhaltungen:
**CH - A - 295 772
DE - A - 2 638 133
DE - A - 2 931 539
DE - A - 2 937 968
DE - C - 704 855
DE - C - 975 011**

(73) Patentinhaber: **Werkzeugmaschinenfabrik
Oerlikon-Bührle AG, Birchstrasse 155, CH-8050 Zürich
(CH)**

(72) Erfinder: **Leutwyler, Robert, Regensbergstrasse 41,
CH-8113 Boppelsen (CH)**
Erfinder: **Mächler, Georg, Chilenaustrasse 23,
CH-8108 Dällikon (CH)**

**Beschreibung**

Die Erfindung betrifft eine Permanentmagnetbremse, insbesondere für Fahrzeuge mit drehbaren Permanentmagneten, an denen segmentförmige Polschuhe befestigt sind, und die zwischen ortsfesten Polstücken angeordnet sind, wobei die Polstücke segmentförmige Aussparungen zur Aufnahme der drehbaren Permanentmagnete aufweisen.

Bei einer bekannten dauermagnetischen Bremse dieser Art, siehe DE-A-2 931 539 und DE-A-2 937 968, sind drehbare Dauermagnetsysteme vorhanden, die aus einem Dauermagneten und segmentförmigen Polschuhen bestehen. Diese zylindrischen Dauermagnetsysteme weisen an ihren Enden Lagerbolzen bzw. Lagerzapfen auf, welche in Lagerbuchsen von Abdeckplatten drehbar gelagert sind. Die Polschuhe ragen in segmentförmige Aussparungen der Polstücke hinein, die ebenfalls an den Abdeckplatten befestigt sind.

Diese bekannte Anordnung hat den schwerwiegenden Nachteil, daß ein kleiner Luftspalt zwischen den drehbaren Dauermagnetsystemen und den ortsfesten Polstücken nicht eingehalten werden kann. Ein zu großer Luftspalt zwischen Dauermagnet und Polstück verringert jedoch wesentlich die maximal erreichbare Bremskraft, da ein großer Luftspalt das Magnetfeld wesentlich verkleinert.

Die Aufgabe, welche mit der vorliegenden Erfindung gelöst werden soll, besteht darin, den drehbaren Permanentmagneten mit seinen Polschuhen derart zu lagern, daß die gewünschte Größe des Luftspaltes genau eingehalten werden kann.

Diese Aufgabe wird erfindungsgemäß einerseits dadurch gelöst, daß an den Enden der Polschuhe und der Permanentmagnete zentrierte Lagerringe angeordnet sind, welche an den segmentförmigen Aussparungen anliegen und deren Durchmesser größer ist als der Durchmesser der Permanentmagnete und der Polschuhe, um einen definierten Luftspalt zwischen den Polstücken einerseits und den Permanentmagneten mit ihren Polschuhen andererseits zu bilden.

Diese Anordnung hat den Vorteil, daß der erforderliche Luftspalt innerhalb wesentlich kleinerer Toleranzen ohne konstruktiven Mehraufwand eingehalten werden kann.

Andererseits wird diese Aufgabe erfindungsgemäß dadurch gelöst, daß sich die in einem Kreis angeordneten Polstücke zwischen einem inneren Polygon aus Permanentmagneten befinden, die an einem aus Rückschlußplatten und Keilstücken gebildeten inneren Zylinder anliegen und zwischen einem äußeren Polygon aus Permanentmagneten die an einem aus Rückschlußplatten und Keilstücken gebildeten äußeren Zylinder anliegen, und die Keilstücke federnd zwischen die Rückschlußplatten geklemmt sind, um Toleranzen auszugleichen und ein spielfreies Anliegen aller genannten Teile und einen definierten Luftspalt zwischen Polstücken und Polschuh zu gewährleisten.

Diese Anordnung hat den Vorteil, daß die Toleranzprobleme wesentlich vereinfacht werden und doch ein spielfreies Aneinanderliegen aller Teile gewährleistet ist.

Ein Ausführungsbeispiel der erfindungsgemäßen Permanentmagnetbremse insbesondere für Fahrzeuge ist im folgenden anhand der Zeichnung ausführlich beschrieben. Es zeigt

Fig. 1 einen Längsschnitt durch die Permanentmagnetbremse in Achsrichtung nach Linie I-I in Fig. 2,

Fig. 2 einen Schnitt nach Linie II-II in Fig. 1, und

Fig. 3 eine schaubildliche Darstellung einer Einzelheit aus Fig. 2.

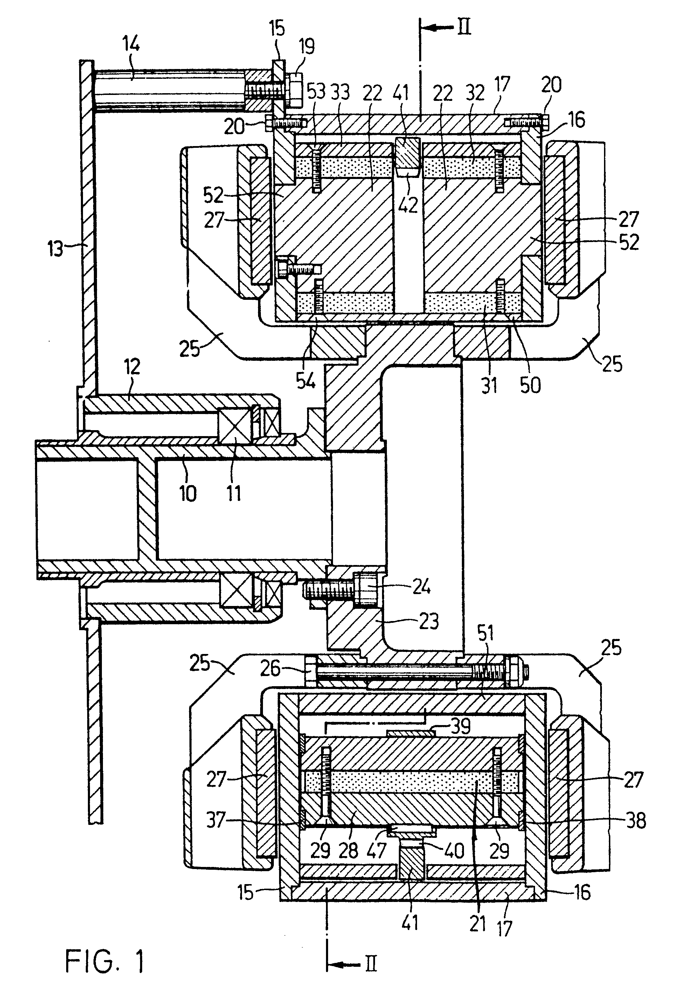

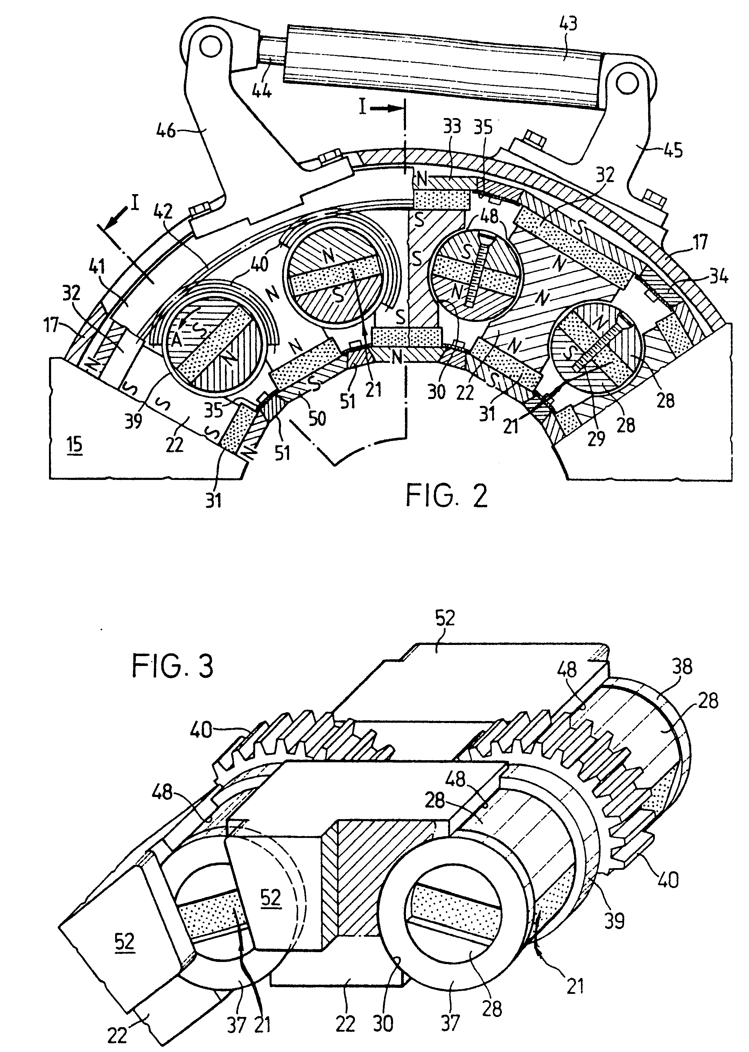

Gemäß Fig. 1 ist auf einer nicht dargestellten Radachse eine Nabe 10 befestigt. Auf dieser Nabe 10 ist über ein Rollenlager 11 eine Hülse 12 drehbar gelagert. An der Hülse 12 ist ein Gehäuse befestigt, das aus einer Scheibe 13, Bolzen 14 und zwei ringförmigen Scheiben 15 und 16 besteht. Die beiden Scheiben 15 und 16 sind durch ein Rohrstück 17 miteinander verbunden. Die ringförmige Scheibe 15 ist über die Bolzen 14 an der Scheibe 13 befestigt. Die Scheibe 13 ist an der drehbar gelagerten Hülse 12 angeschweißt und die ringförmige Scheibe 15 ist an den Bolzen 14 mittels Schrauben 19 befestigt. Die beiden ringförmigen Scheiben 15 und 16 sind mit dem Rohrstück 17 durch Schrauben 20 verbunden. Das Rohrstück 17 bildet zusammen mit den beiden Scheiben 15 und 16 einen ringförmigen Hohlraum, in welchem einerseits drehbar gelagerte Permanentmagnete 21 und starr befestigte Polstücke 22 angeordnet sind, wie insbesondere auch aus Fig. 2 ersichtlich ist.

An der sich mit der Radachse drehenden Nabe 10 ist ein Ring 23 mit Hilfe von Schrauben 24 befestigt. Auf diesem Ring sitzt ein zweiteiliges Gehäuse 25, das mit Hilfe von Schrauben 26 am Ring 23 befestigt ist. Am Gehäuse 25 sind zwei Wirbelstrombremsscheiben 27 befestigt, welche sich gegenüber den erwähnten ortsfesten Permanentmagneten 21 und den ortsfesten Polstücken 22 drehen.

Gemäß Fig. 2 sind zu beiden Seiten der stabförmigen Permanentmagnete 21 je ein im Querschnitt segmentförmiger Polschuh 28 mit Hilfe von vier Schrauben 29 befestigt, von denen in Fig. 1 nur zwei dargestellt sind. Die Permanentmagnete 21 mit ihren Polschuhen 28 sind zwischen je zwei Polstücken 22 gelagert, welche zu beiden Seiten zwei entsprechende, segmentförmige Aussparungen 30 aufweisen. Die Polstücke 22 sind zwischen zwei ortsfesten Permanentmagneten 31 und 32 angeordnet. Die inneren ortsfesten Permanentmagnete 31 sind durch Rückschlußplatten 50 und die äußeren ortsfesten Permanentmagnete 32 sind durch Rückschlußplatten 33 abgedeckt. Zwischen zwei benachbarten Rückschlußplatten 33 bzw. 50 ist jeweils ein Keilstück 34 bzw. 51 angeordnet. An jedem Keilstück 34 bzw. 51 ist eine Blattfeder 35 befestigt, welche sich mit ihren beiden Enden an den benachbarten Rückschlußplatten 33 bzw. 50 abstützt, welche durch Schrauben 53, 54 (Fig. 1) an den Polstücken 22 befestigt sind.

Die inneren Rückschlußplatten 33 bzw. 50 und die äußeren Rückschlußplatten 50 bilden mit den Keilstücken 34 bzw. 51 je einen polygonartigen Ring oder Zylinder, dessen Durchmesser dank der federnden Befestigung der Keilstücke an den Rückschlußplatten 33 bzw. 50 sich so einstellt, daß die Rückschlußplatten 33 bzw. 50 spielfrei an den Polstücken 22 anliegen. Ebenso bilden die inneren Permanentmagnete 31 und die äußeren Permanentmagnete 32 je ein Polygon.

Zur radialen Lagerung der Permanentmagnete 21 mit ihren Polschuhen 28 in den segmentförmigen Aussparungen 30 der Polstücke 22 dienen an beiden Enden der Polschuhe 28 zentrierte Lagerringe 37 und 38 (Fig. 1) sowie ein mittlerer, durch einen Keil 47 gesicherter Lagerring 39, der einen Zahnsektor 40 aufweist (Fig. 2). Der Durchmesser der beiden Lagerringe 37 und 38 an den beiden Enden der Polschuhe 28 ist etwas größer als der Durchmesser der Permanentmagnete 21 mit ihren Polschuhen 28, um zu verhindern, daß die Polschuhe 28 an den Polstücken 22 anliegen. Ohne diesen Spalt zwischen den Polstücken 22 und den Polschuhen 28 wäre es wegen der zu großen Reibung nicht möglich, die Permanentmagnete 21 mit den Polschuhen 28 zu drehen. Die Drehung der Permanentmagnete 21 mit ihren Polschuhen 28 ist notwendig, um die Bremskraft einstellen zu können, wie weiter unten erläutert ist. Die Lagerringe 37, 38 dienen auch zur axialen Lagerung der Permanentmagnete 21 mit ihren Polschuhen 28. Gemäß Fig. 1 und 3 weisen die Polstücke 22 an ihrem Ende einen Nocken 52 auf, der in Aussparungen der Scheiben 15 bzw. 16 hineinragt und an dem sich der Lagerring 37 bzw. 38 in axialer Richtung abstützt.

Zum Drehen der Permanentmagnete 21 dient ein Ring 41 mit Innenverzahnung 42 sowie ein Zylinder 43 in dem sich ein nicht dargestellter Kolben befindet, der an einer Kolbenstange 44 befestigt ist. Der Zylinder 43 ist schwenkbar an einem am Rohrstück 17 befestigten Halter 45 angelenkt und die Kolbenstange 44 ist schwenkbar an einem am Ring 41 befestigten Halter 46 angelenkt. Der Kolben läßt sich hydraulisch oder pneumatisch im Zylinder verschieben, wodurch auch der Ring 41 sich um seinen Mittelpunkt dreht und über die Innenverzahnung 42 sämtliche Zahnsektoren 40 dreht, die mit dieser Innenverzahnung 42 in Eingriff stehen.

Die Permanentmagnete 21 mit ihren Polschuhen 28 lassen sich aus der in Fig. 2 dargestellten Lage um 90° drehen, wobei sich alle im Gegenuhrzeigersinne, d. h. in Richtung des Pfeiles A drehen.

Die Polarisierung der Permanentmagnete 21, 31 und 32 ist aus Fig. 2 ersichtlich, in der an jedem Permanentmagnet die Pole mit N (Nordpol) und S (Südpol) bezeichnet sind. Dabei liegen die beiden ortsfesten Permanentmagnete 31 und 32 abwechselnd mit ihrem Nordpol N oder mit ihrem Südpol S am Polstück 22 an und bei den drehbaren Permanentmagneten 21 ist abwechselnd der Nordpol N oder der Südpol S radial nach innen und entsprechend der Südpol S oder der Nordpol N radial nach außen gerichtet. Werden nun sämtliche drehbaren Permanentmagnete 21 um 90° im Gegenuhrzeigersinne gedreht, dann sind gegen ein Polstück 22 entweder vier Südpole S oder vier Nordpole N gerichtet.

In der gezeigten Stellung der Permanentmagnete 21 verschwindet die Bremskraft. Nach einer Drehung der Permanentmagnete 21 um 90° ist die Magnetkraft, d. h. die Bremskraft, am größten.

Die Bremskraft ist weitgehend von der Größe der Luftspalten zwischen den Polschuhen 28 der drehbaren Permanentmagnete 21 und den Polstücken 22 abhängig.

**Patentansprüche**

1. Permanentmagnetbremse, insbesondere für Fahrzeuge, mit drehbaren Permanentmagneten (21), an denen segmentförmige Polschuhe (28) befestigt sind, und die zwischen Polstücken (22) angeordnet sind, wobei die Polstücke segmentförmige Aussparungen (30) zur Aufnahme der drehbaren Permanentmagnete (21) aufweisen, dadurch gekennzeichnet, daß an den Enden der Polschuhe (28) und der Permanentmagnete (21) zentrierte Lagerringe (37, 38) angeordnet sind, welche an den segmentförmigen Aussparungen (30) anliegen und deren Durchmesser größer ist als der Durchmesser der Permanentmagnete (21) und der Polschuhe (28), um einen definierten Luftspalt (48) zwischen den Polstücken (22) einerseits und den Permanentmagneten (21) mit ihren Polschuhen (28) andererseits zu bilden.

2. Permanentmagnetbremse nach Anspruch 1, dadurch gekennzeichnet, daß außer den beiden Lagerringen (37, 38) an den Enden der Polschuhe (28) und der Permanentmagnete (21) noch ein dritter Lagerring (39) in der Mitte zwischen den Lagerringen (37, 38) an den Polschuhen (28) und den Permanentmagneten (21) angeordnet ist, an dem ein Zahnsektor (40) befestigt ist und der ein Durchbiegen der Polschuhe (28) und der Permanentmagnete (21) verhindert.

3. Permanentmagnetbremse nach Anspruch 1, dadurch gekennzeichnet, daß sich die Polschuhe (28) und die Permanentmagnete (21) in den Lagerringen (37, 38) drehen.

4. Permanentmagnetbremse nach Anspruch 2, dadurch gekennzeichnet, daß sich der mittlere Lagerring (39) mit den Polschuhen (28) und den Permanentmagneten (21) dreht.

5. Permanentmagnetbremse nach dem Oberbegriff des Anspruches 1, dadurch gekennzeichnet, daß die in einem Kreis angeordneten Polstücke (22) sich zwischen einem inneren Polygon aus Permanentmagneten (31) die an einem aus Rückschlußplatten (50) und Keilstücken (51) gebildeten inneren Zylinder anliegen und zwischen einem äußeren Polygon aus Permanentmagneten (32) befinden, die an einem aus Rückschlußplatten (33) und Keilstücken (34) gebildeten äußeren Zylinder anliegen und daß die Keilstücke (34, 51) federnd zwischen die Rückschlußplatten (33, 50) geklemmt sind um Toleranzen auszugleichen und ein spielfreies Anliegen aller genannten Teile (22, 31, 32, 33, 34, 50, 51) und einen definierten Luftspalt zwischen Polstücken und Polschuh zu gewährleisten.

6. Permanentmagnetbremse nach Anspruch 5, dadurch gekennzeichnet, daß an den zwischen zwei Rückschlußplatten (33, 50) befindlichen Keilstücken (34, 51) Blattfedern (35) befestigt sind, die sich an den benachbarten Rückschlußplatten (33, 50) abstützen und das Bestreben haben, die Keilstücke (34, 51) an die beiden benachbarten Rückschlußplatten (33, 50) anzudrükken.


**Claims**

1. Permanent-magnet brake, especially for vehicles, with rotatable permanent magnets (21), to which segment-shaped pole shoes (28) are fastened and which are arranged between pole pieces (22), the pole pieces having segment-shaped recesses (30) for receiving the rotatable permanent magnets (21), characterised in that arranged on the ends of the pole shoes (28) and of the permanent magnets (21) are centered bearing rings (37, 38) which rest against the segment-shaped recesses (30) and the diameter of which is greater than the diameter of the permanent magnets (21) and of the pole shoes (28), in order to form a defined air gap (48) between the pole pieces (22) on the one hand and the permanent magnets (21) with their pole shoes (28) on the other hand.

2. Permanent-magnet brake according to Claim 1, characterised in that, in addition to the two bearing rings (37, 38) on the ends of the pole shoes (28) and of the permanent magnets (21), a third bearing ring (39) is also arranged on the pole shoes (28) and the permanent magnets (21) in the centre between the bearing rings (37, 38), the third bearing ring (39) having a toothed sector (40) fastened to it and preventing the pole shoes (28) and the permanent magnets (21) from sagging.

3. Permanent-magnet brake according to Claim 1, characterised in that the pole shoes (28) and the permanent magnets (21) rotate in the bearing rings (37, 38).

4. Permanent-magnet brake according to Claim 2, characterised in that the central bearing ring (39) rotates together with the pole shoes (28) and the permanent magnets (21).

5. Permanent-magnet brake according to the preamble of Claim 1, characterised in that the pole pieces (22) arranged in a circle are located between an inner polygon of permanent magnets (31), which rest against an inner cylinder formed by return yoke plates (50) and wedge pieces (51), and an outer polygon of permanent magnets (32) which rest against an outer cylinder formed by earth-return plates (33) and wedge pieces (34), and in that the wedge pieces (34, 51) are clamped resiliently between the return yoke plates (33, 50) to compensate for tolerances and to guarantee that all the said parts (22, 31, 32, 33, 34, 50, 51) rest against one another free of play und that there is a defined air gap between the pole pieces and pole shoe.

6. Permanent-magnet brake according to Claim 5, characterised in that fastened to the wedge pieces (34, 51) located between two earth-return plates (33, 50) are leaf springs (35) which are supported on the adjacent earth-return plates (33, 50) and which endeavour to press the wedge pieces (34, 51) against the two adjacent earth-return plates (33, 50).


**Revendications**

1. Frein à aimants permanents notamment pour véhicules, ayant des aimants permanents (21) tournants, dans lesquels sont fixés des patins polaires (28) en forme de segments et qui sont prévus entre des pièces polaires (22), les pièces polaires ayant des cavités (30) en forme de segments pour recevoir les aimants permanents (21) rotatifs, caractérisé en ce qu'à l'extrémité des patins polaires (28) et des aimants permanents (21) se trouvent des bagues de palier (37, 38), centrées, qui s'appuient contre les cavités (30) en forme de segments et dont le diamètre est supérieur au diamètre des aimants permanents (21) et des patins polaires (28), pour former un entrefer (48) défini entre d'une part les pièces polaires (22) et d'autre part les aimants permanents (21) et leurs patins polaires (28).

2. Frein à aimants permanents selon la revendication 1, caractérisé en ce qu'en plus des deux bagues de palier (37, 38) aux extrémités des patins polaires (28) et des aimants permanents (21), il est encore prévu une troisième bague de palier (39) au milieu entre les bagues de palier (37, 38), sur les patins polaires (28) et les aimants permanents (21), baque à laquelle est fixé un secteur denté (40) et qui évite un fléchissement des patins polaires (28) et des aimants permanents (21).

3. Frein à aimants permanents selon la revendication 1, caractérisé en ce que les patins polaires (28) et les aimants permanents (21) tournent dans les bagues de palier (37, 38).

4. Frein à aimants permanents selon la revendication 2, caractérisé en ce que la bague de palier (39) médiane tourne avec les patins polaires (28) et les aimants permanents (21).

5. Frein à aimants permanents selon la revendication 1, caractérisé en ce que les pièces polaires (22) réparties suivant un cercle se trouvent entre un polygone interne formé des aimants permanents (31) qui s'appuient contre un cylindre interne constitué de plaques de retour de flux (50) et de pièces en forme de coins (51), et un polygone externe formé par les aimants permanents (32) qui s'appuient contre un cylindre externe constitué par les plaques de retour de flux (33) et de pièces en forme de coins (34), et en ce que les pièces en forme de coins (34, 51) sont pincées élastiquement entre les plaques de retour de flux (33, 50) pour compenser les tolérances et assurer une application sans jeu de toutes les pièces mentionnées (22, 31, 32, 33, 34, 50, 51) et d'assurer un entrefer défini, entre les pièces polaires et les patins polaires.

6. Frein à aimants permanents selon la revendication 5, caractérisé en ce que des ressorts-lames (35) sont fixés sur les pièces en forme de coins (34, 51) qui se trouvent entre deux plaques de retour de flux (33, 50), ressorts-lames qui s'appuient contre les plaques adjacentes de retour de flux (33, 50) et ont tendance à pousser les pièces en forme de coins (34, 51) contre les deux plaques de retour de flux (33, 50) adjacentes.

FIG. 1

FIG. 2

FIG. 3